# EUROPEAN PATENT APPLICATION

(11) **EP 4 043 843 A1**
(43) Date of publication of application: **17.08.2022**
(21) Application number: 21157391.0
(22) Date of filing: 16.02.2021
(51) Int. Cl.: G01F 25/00

(54) **TEST STAND FOR LIQUID FLOW METERS**

(71) Applicant: Belimo Holding AG, 8340 Hinwil (CH)
(72) Inventor: Holoch, Philip, 8484 Neschwil (CH)
(74) Representative: Keller Schneider Patent- und Markenanwälte AG

(57) **Abstract**

A test stand (100) for calibrating and/or testing a flow meter for a liquid (T), comprises:
a) a test line (101) for installation of a flow meter to be tested (T), whereby the test line (101) comprises a supply line (112) for supplying a test liquid to the flow meter to be tested (T) and a discharge line (113) for discharging the test liquid after exiting the flow meter to be tested (T);
b) a liquid supply device (111) for delivering the test liquid through the supply line (112);
c) a measuring device (120) for determining a quantity, especially a mass and/or a volume, of test liquid flowing through the flow meter to be tested (T);
characterized in that
d) the test stand comprises a heating device (130) for increasing the temperature of the test liquid before entering the flow meter to be tested (T), and a cooling device (140) for reducing the temperature of the liquid after exiting the flow meter to be tested (T).

## Description

### Technical field

The invention relates to a test stand and a method for calibrating and/or testing a flow meter for a liquid. Additionally, the invention is concerned with the use of a test stand for calibrating and/or testing a flow meter for a liquid.

### Background art

Reliable flow measurements of liquids play a crucial role for many industries and applications, for example in chemical and petrochemical industry, in oil and gas production, in power and steam generation, in pharmaceutical industries, food industry, in water supply systems, in wastewater treatment systems, for energy allocation systems, for district heating or district cooling, as well as in heating, ventilation and air conditioning systems. Depending on the specific application, different flow meters with different accuracies are required.

Thereby flow meters or flow sensors, respectively, are used for quantification of actual fluid flow rates and/or for quantification of a total amount of fluid flowed through in a given time period. Specifically, flow meters are devices capable of measuring a fluid flow and/or a total amount of fluid in physical quantities such as volume per time (volume flow rate), mass per time (mass flow rate), total mass or total volume, with units as e.g. liters per second, kilograms per second, kilograms or liters, respectively. Thus, flow meters allow for accurately monitoring and/or controlling a fluid flow.

There are many different types of flow meters known, which are based on various measurement methods. Examples are ultrasound-based flow meters, magnetic flow meters, differential pressure flow sensor, vortex flowmeters, Coriolis flowmeters and many more. For all flow meters, calibration and/or testing is crucial in order to correctly link the reading of the flow meter with the real flow rate of the fluid or to determine the accuracy of the flow meter, respectively. Preferably, this is done under real conditions prevailing during the intended application of the flow meter. Calibration is the comparison of measurement values delivered by the flow meter to be tested with those of a reference standard of known and higher accuracy.

Typically flow meters for liquids are calibrated by comparing the indicated amount of a test liquid having passed the flow meter to be tested with the true amount of the test liquid having passed the flow meter. Thereby, the true amount can in particular be determined by (i) collecting the test liquid having passed the flow meter in a container and measuring the volume or the mass over the time of the test liquid in the container or (ii) by a master flow meter which is connected in series.

In practice, however, test stands for calibrating flow meters for liquids have various problems and drawbacks. For example, when measuring the volume of the liquid in the container, different temperatures of the test liquid will cause temperature expansions of the container, which in turn gives additional measurement errors. This can be circumvented by measuring the mass of the test liquid. However, in this case, stabilization of the balance used for determining the weight of the test liquid in the container is an issue. Specifically, the test liquid flowing into the container causes the container and the liquid already comprised therein to move and wave, resulting in unstable conditions of the balance. Usually it takes quite some time until the weighting system has settled such that the mass of the test liquid can be determined reliably. Furthermore, inlet lines protruding into the container can cause buoyant forces which distort the measurement when the level of test liquid in the container increases.

Also, calibrating a flow meter with a test liquid above its standard boiling point, e.g. > 100°C for water, is very demanding. This is because the test liquid once it has reached the container will at least partly evaporate under standard conditions. Consequently, technically demanding measures are required in order to prevent incorrect measuring values.

Known test stands often are designed for high precision calibrations and tests. Typically, these test stands are technically highly complex and expensive. Especially for calibrating flow meters with reduced accuracy requirements, it is rather uneconomical and overshooting the mark to use such kind of test stands.

There is thus a need to provide improved solutions, which overcome the aforementioned drawbacks.

### Disclosure of the invention

It is an object of the present invention to provide improved test stands for calibrating and/or testing flow meters for liquids. Preferably, the test stands should allow for a precise calibration and testing of flow meters while being as simple in construction and as cost effective as possible.

According to a first more specific object, with the test stands it should be possible to calibrate flow meters for liquids at different temperatures, in particular with a test liquid above its standard boiling point, e.g. > 100°C for water, with minimal measurement errors. In the present context, the standard boiling point is meant to be the temperature at which boiling of a liquid occurs under a pressure of 1 bar.

According to a second more specific object, the test stand should allow for calibration or testing of flow meters in as short a time as possible with minimal measurement errors.

Preferably, at least the first or the second specific objects are met, most preferably both of the specific objects are met in combination.

Surprisingly, it has been found that a first solution of the object of the invention is a test stand according to claim 1 as well as a method and a use according to independent claims 9 and 15.

Thus, a first aspect of the first solution is directed to a test stand for calibrating and/or testing a flow meter for a liquid, comprising:
a) a test line for installation of a flow meter to be tested, whereby the test line comprises a supply line for supplying a test liquid to the flow meter to be tested and an a discharge line for discharging the test liquid after exiting the flow meter to be tested;
b) a liquid supply device for delivering the test liquid to the supply line;
c) a measuring device for determining a quantity, especially a mass and/or a volume, of test liquid flowing through the flow meter to be tested;
   whereby
d) the test stand comprises a heating device for increasing the temperature of the test liquid before entering the flow meter to be tested, and a cooling device for reducing the temperature of the liquid after exiting the flow meter to be tested.

Thus, with the inventive test stand, it is possible to limit a section of elevated temperature essentially to the test line which can be kept relatively short. If required, the test liquid can be pressurized in the section of elevated temperature in order to avoid evaporation. However, all of the other components of the test line, such as e.g. the measuring device and supply components, can be kept at lower temperatures and pressures, especially at ambient temperature and ambient pressure. Furthermore, energy consumption of the test stand can be minimized.

Also, with the inventive approach, there are hardly any issues with regard to evaporation of the test liquid in the measuring device or regarding thermal expansion of the measuring device. This allows for a precise calibration and testing of flow meters at increased temperatures with established measuring devices that can be operated under ambient conditions.

Furthermore, the inventive setup can be realized with readily available and rather inexpensive components. Alternatively, existing test stands require relatively few adaptions in order to turn them into inventive test stands. Put differently, the inventive test stands are rather simple in construction and cost effective.

In principle, it is possible as well to omit feature d) and to provide a test stand with the following feature d'): the test stand comprises a cooling device for reducing the temperature of the test liquid before entering the flow meter to be tested, and a heating device for increasing the temperature of the test liquid after exiting the flow meter to be tested. In this case, the test line can be operated at lower temperatures and all of the other components of the test line, such as e.g. the measuring device and supply components, can be kept at higher temperatures, especially at ambient temperature and ambient pressure. If such a setup is required, the following descriptions and explanations are likewise valid if the heating device is replaced by the cooling device.

According to a preferred embodiment, the heating device is located in the supply line and/or upstream the supply line, and downstream the liquid supply device.

The cooling device in particular is provided in the discharge line and/or downstream the discharge line, and upstream the measuring device.

However, other arrangements of the heating and/or cooling devices are possible as well.

Preferably, the heating device and/or the cooling device comprises a heat exchanger. Heat exchanger turned out to be highly efficient for changing the temperature of the test liquid in short time. However, other heating or cooling devices can be suitable as well.

The heat exchanger in particular is a recuperative and indirect contact heat exchanger. These kind of heat exchangers have separate flow paths for each fluid and the fluids flow simultaneously through the exchanger exchanging heat across an element separating the flow paths. Indirect contact heat exchangers keep the fluids exchanging heat separate by the use of fluid lines, e.g. tubes and/or plates.

Thus with a recuperative and indirect contact heat exchanger, there is no risk that test liquid is lost or contaminated during the heating and/or cooling process and a heat transfer medium can freely be chosen. However, for special applications, other types of heat exchangers can be suitable as well.

Especially the heating device comprises a supply side heat exchanger with at least two separate flow paths, whereby the supply side heat exchanger is arranged in the supply line such that in operation the test liquid to be delivered to the flow meter passes a first flow path of the supply side heat exchanger. The second flow path of the supply side heat exchanger in particular is used for providing a heat transfer medium.

Preferably, the heating device further comprises a heating unit, which is designed for heating a heat transfer medium and providing it to the second flow path of the supply side heat exchanger.

The cooling device preferably comprises a discharge side heat exchanger with at least two separate flow paths, whereby the discharge side heat exchanger is arranged in the discharge line such that in operation, the liquid exiting the flow meter to be tested passes a first flow path of the discharge side heat exchanger. The second flow path of the discharge side heat exchanger in particular is used for providing a heat transfer medium.

Also, the cooling device further comprises a cooling unit, which is designed for cooling a heat transfer medium and providing it to the second flow path of the discharge side heat exchanger.

According to a highly preferred embodiment, the second flow path of the supply side heat exchanger is connected to the cooling unit of the discharge side heat exchanger and the second flow path of the discharge side heat exchanger is connected to the heating unit of the supply side heat exchanger, such that in operation the heat transfer medium circulates between the supply side heat exchanger and discharge side heat exchanger, whereby in between it can be heated by the heating unit and cooled by the cooling unit.

Such a setup turned out to be highly efficient. However, it is for example also possible to operate the two heat exchangers independently of each other, if desired with different heat transfer media.

According to another highly preferred embodiment, the heating device comprises a supply side heat exchanger and a supplemental supply side heat exchanger, and the cooling device comprises a discharge side heat exchanger and a supplemental discharge side heat exchanger. Especially, the supplemental supply side heat exchanger is used as an after-heater downstream the supply side heat exchanger, and the supplemental discharge side heat exchanger is used as an after-cooler downstream the discharge side heat exchanger. In particular, all of the four heat exchangers are configured as described above.

Thereby, preferably, each of the heat exchangers comprises at least two separate flow paths, whereby the heat exchangers are arranged in the supply line such that in operation the test liquid flowing through the flow meter to be tested passes a first flow path of each heat exchanger and the second flow path of each heat exchanger in particular is used for providing a heat transfer medium.

In this embodiment, preferably, the second flow path of the supply side heat exchanger is connected to the second flow path of the discharge side heat exchanger, such that a first heat transfer medium can circulate between these two heat exchangers in a closed circuit, e.g. driven by a pump. In particular, the supplemental supply side heat exchanger is operated with a second heat transfer medium and the supplemental discharge side heat exchanger is operated with a third heat transfer medium. The second heat transfer medium and third heat transfer medium can e.g. be brought to a desired temperature with an additional heating unit, which is connected to the supplemental supply side heat exchanger and/or an additional cooling unit, which is connected to supplemental discharge side heat exchanger. Also it is possible, to circulate the second heat transfer medium and/or the third heat transfer medium each in a separate closed loop.

This setup according to the other highly preferred embodiment turned out to be highly efficient as well for achieving a desired temperature in the test line.

In particular, the liquid supply device for delivering the liquid to the supply line is a pump. A pump allows in particular for providing a controlled and constant flow of test liquid. Furthermore, it is possible to pressurize the test liquid in the test line with the pump. This is especially helpful, if the temperature of the test liquid is increased to a temperature above its standard boiling point.

However, a liquid reservoir at an elevated height above the test line could be used in addition or alternatively to the pump for providing a constant flow of test fluid.

Preferably, the liquid supply device on an input side is in fluid communication with a liquid reservoir. In particular, the liquid reservoir is arranged at an elevated height above the test line. A reservoir allows for a continuous feed of test liquid in an easy and reliable manner. Nevertheless, it is possible as well to connect the liquid supply directly to a liquid supply line.

Preferably, at least one valve, especially a pressure relief valve and/or a flow control valve, is included in the discharge line and/or downstream the discharge line and upstream the measuring device. Such valves, especially in combination with a pump, allow for controlling the pressure in the test line and/or the flow rate of the test liquid passing through the flow meter to be tested.

However, these valves are optional. Alternatively or in addition, the flow rate and/or pressure relief can be determined by the inner size of the discharge line or other measures.

Especially, there is a return line for returning the liquid exiting the flow meter to be tested back to the liquid supply device and/or to the liquid reservoir. Thus, in this case a closed system for the test liquid can be realized. Alternatively or in addition, the test liquid can for example partly or completely be discharged into a drain and/or a waste liquid tank.

Highly preferred, there is a bypass line for bypassing the measuring device, whereby a diverter valve is arranged such that the liquid exiting the flow meter can either be directed into the bypass line or into the measuring device. The bypass preferably is in fluid communication with the return line, if the latter is present.

With such a setup it is possible to bypass the measuring device so that the test liquid can circulate through the flow meter to be tested before a measurement takes place. This helps to achieve stable flow conditions.

Put differently, in the case a continuous flow of the test liquid through the flow meter to be tested is diverted between the bypass returning the test liquid to the supply line and the measuring device. With an optional timer that is coupled to the diverter, the time in which the test liquid flows to the measuring device can be determined in addition to the amount of test liquid. Thus, a so called "flying start and stop method" can be implemented.

However, the inventive test stand can be realized without bypass if desired, e.g. if a so called "standing start and stop" method is to be implemented.

The measuring device is a device for determining the mass and/or the volume of the liquid flowing through flow meter to be tested. Especially the measuring device is placed in series with the test line, most preferably downstream the flow meter to be tested, e.g. in the discharge line or downstream the discharge line.

The measuring device preferably comprises a receptacle for collecting the liquid exiting the flow meter to be tested and a device for determining the mass and/or the volume of the test liquid in the receptacle. Most preferably, the measuring device comprises a device for determining the mass of the test liquid.

However, it is also possible to install a reference flow meter as the measuring device in series with the flow meter to be tested. The reference flow meter is a flow meter that is calibrated to a known standard. In particular, the reference flow meter has a higher accuracy than the flow meter to be tested. Reference flow meters are also called master flow meters.

Especially, the test stand comprises a control unit which is configured for communicating with the measuring device and/or the flow meter to be tested, especially for receiving data from these devices. In particular, the control unit is configured for obtaining the true flow rate of the flow meter to be tested by taking into account the data provided by the measuring device.

Preferably, the control unit is configured for receiving data from the measuring unit and/or for determining the mass and/or the volume of test liquid flowing through the flow meter to be tested per unit of time. In particular, the control unit is configured for determining the mass of the liquid in the receptacle as a function of time and, preferably, for extracting a slope of this function. Especially, the control unit furthermore is configured for smoothing received data, e.g. with a software filter.

Furthermore, the control unit preferably is configured for comparing the true flow rate with the indicated flow rate provided by the flow meter to be tested. Thereby, preferably a correction factor and/or a deviation is calculated.

In particular, the measuring device is a measuring device for determining a mass of liquid flowing through the flow meter to be tested per unit of time, whereby the measuring device comprises a receptacle for receiving a test liquid to be quantified and an inlet line with at least one outlet opening for introducing the test liquid to be quantified into the receptacle and a weighting device for determining a mass of the test liquid in the receptacle.

Thereby, in even more preferred embodiments, with regard to a vertical height of the receptacle, the at least one outlet opening of the inlet line is located in a lower half, especially in a lowest quarter, of the receptacle.

Advantages and more preferred embodiments of the measuring device are described below in connection with a second solution of the present invention. Thus, these embodiments can be implemented in the first solution likewise.

A further aspect of the first solution is a method for calibrating and/or testing a flow meter for a liquid, especially with a test stand as described above, comprising the steps of:
(i) installing a flow meter to be tested in a test line of a test stand, whereby the test line comprises a supply line for supplying a liquid to the flow meter to be tested and a discharge line for discharging the liquid after exiting the flow meter to be tested;
(ii) delivering a test liquid by a liquid supply device to the supply line of the test line, so that the test liquid flows through the flow meter to be tested into the discharge line;
(iii) determining a quantity, especially the mass and/or the volume, of test liquid per unit of time flowing through flow meter to be tested with a measuring device;
   whereby
(iv) an initial temperature of the test liquid delivered by the liquid supply device is increased to a test temperature with a heating device before the liquid enters the flow meter to be tested, and the temperature of the liquid after having passed the flow meter to be tested is reduced to a final temperature with a cooling device.

Advantages described above in connection with the test stand and its specific embodiments are likewise given with regard to the inventive method. Preferably, the method is implemented with a test stand having one or more of the features according to the specific embodiments described above.

In principle, it is possible as well to omit feature (iv) and to implement the method with the following feature (iv'): an initial temperature of the test liquid delivered by the liquid supply device is decreased to a test temperature with a cooling device before the liquid enters the flow meter to be tested, and the temperature of the liquid after having passed the flow meter to be tested is increased to a final temperature with a heating device. In this case, the test line is operated at lower temperatures and all of the other components of the test line, such as e.g. the measuring device and supply components, can be kept at higher temperatures, especially at ambient temperature and ambient pressure. If such a setup is required, the following descriptions and explanations are likewise valid if the heating device is replaced by the cooling device.

Especially the initial temperature is room temperature or a temperature of 0 - 50°C, especially 10 - 30°C, in particular 15 - 27°C. In this case, the test stand can for example be installed in an ordinary room without special temperature control.

The test temperature in particular is a temperature above the standard boiling point of the test liquid, especially at least 5°C, in particular at least 10°C, for example 10 - 30°C, above the standard boiling point. It is one of the advantages that with the inventive method, test temperatures in this range can easily be realized. However, the method works of course also with lower test temperatures.

Preferably, a difference between the initial temperature and the final temperature is 0 - 5°C, especially 0 - 2°C, in particular 0-1°C, most preferably 0°C. Thus, in this case, the components upstream the test line as well as downstream the test line can be kept at ambient temperature. Nevertheless for special calibrations, there might be a higher temperature difference.

Preferably, in the test line, a pressure of the liquid is increased from an initial pressure to a test pressure, especially with the liquid supply device, and subsequently released to a final pressure, especially with a pressure relief valve, before the quantity of the liquid exiting the flow meter to be tested is determined with the measuring device. By applying a pressure in the test line, boiling of the test liquid can be prevented if for example, the test temperature is above the standard boiling point. However, if the test temperature is lower, it is possible to abstain from increasing the pressure in the test line.

Especially, a difference between initial pressure and final pressure is 0 - 1 bar, especially 0-0.1 bar, in particular 0 bar. Thus, the components upstream the test line as well as downstream the test line can for example both be kept at ambient pressure in this case. However, other configurations might be suitable as well for special calibrations.

According to a preferred embodiment, the pressure in the test line is increased by 0.1 - 9 bar, especially 0.5 - 4 bar, in particular 1 - 3 bar. With such pressure increases, it is possible to prevent boiling of typically used test liquids such as water and/or glycols. However, other pressure ranges might be suitable as well for special calibrations.

In particular, the pressure in the test line is increased such that at the test temperature, boiling of the liquid passing the flow meter to be tested is prevented.

Preferably, determination of the quantity of the liquid flowing through the flow meter to be tested with the measuring device takes place under ambient pressure and/or ambient temperature. This allows for a precise calibration and testing of flow meters with established measuring devices that can be operated under ambient conditions. Nevertheless, in special cases, determination of the quantity of the liquid flowing through the flow can take place at higher or lower pressures and/or at higher or lower temperatures.

Especially, the test liquid comprises or consists of water. However, other test liquids, such as e.g. glycols, oil and/or heat exchange media, can be employed as well.

In case the test liquid comprises or consists of water, the test temperature is for example > 100°C, especially 105 - 130°C, in particular 110 - 130°C, and the pressure in the test line is increased to a pressure of 1.1 - 10 bar, especially, 1.5 - 5 bar, in particular 2-4 bar.

A further aspect of the first solution is directed to the use of a test stand as described above for calibrating and/or testing a flow meter for a liquid with a test liquid having a temperature above ambient temperature, especially above the standard boiling point of the test liquid.

A second solution of the object of the present invention is described in the following section.

The second solution can be realized independently of the first solution described above. In this case, feature d) of the test stand according to the first solution (i.e. a heating and a cooling device) and/or feature (iv) of the method according to the first solution (heating and cooling of the of the test liquid) can be omitted. Nevertheless it is possible to combine the two solutions, if desired.

A first aspect of the second solution is related to a test stand for calibrating and/or testing a flow meter for a liquid, comprising:
a) a test line for installation of a flow meter to be tested, whereby the test line comprises a supply line for supplying a test liquid to the flow meter to be tested and a discharge line for discharging the test liquid after exiting the flow meter to be tested;
b) a liquid supply device for delivering the test liquid through the supply line, so that the test liquid flows through the flow meter to be tested into the discharge line;
c) a measuring device for determining a mass of liquid flowing through the flow meter to be tested per unit of time; whereby the measuring device comprises a receptacle for receiving the test liquid to be quantified and an inlet line with at least one outlet opening for introducing the test liquid to be quantified into the receptacle and a weighting device for determining a mass of the test liquid in the receptacle;
   whereby
d) with regard to a vertical height of the receptacle, the at least one outlet opening of the inlet line is located in a lower half, especially in a lowest quarter, of the receptacle.

With such a test stand, the test liquid to be quantified can be introduced into the receptacle in a gentler manner. For example, waves or turbulences in the receptacle caused by test liquid impinging on the receptacle or on the test liquid already comprised in the receptacle will significantly be reduced. This in turn reduces vibrations and/or movements of the receptacle and the weighting device significantly. Hence, while the test liquid is introduced into the receptacle, the measuring device is in a more stable condition resulting in less weight fluctuations.

The inventive setup therefore is highly suitable for implementing a "flying start and stop method" which allows for a rather quick calibration and/or testing of a flow meter to be tested. Thereby, a time consuming stabilization of the measuring device is not required.

Furthermore, if in operation the at least one outlet opening of the inlet line is located below the surface of the test liquid in the receptacle, the introduction of the test liquid will be even gentler since the flow of the test liquid can be controlled very efficiently.

Also the setup of the second solution can be realized with readily available and rather inexpensive components and alternatively, existing test stands require relatively few adaptions in order to turn them into inventive test stands. Put differently, the inventive test stands are rather simple in construction and cost effective.

Consequently, the second solution allows for a cost effective calibration and/or testing a flow meter in a rather short time while still achieving a high precision or a rather low level of measurement errors, respectively.

Preferably, a cross-sectional area of the at least one outlet opening or of all outlet openings is at least as large as, preferably larger than, the inner cross-sectional area of the inlet line. This prevents a pressure buildup in the inlet line and helps to achieve a rather smooth and slow liquid stream of the test liquid when it enters the receptacle. Also, waves and turbulences can be reduced with this measure. However, for special situations, other configurations might be suitable as well.

Especially, the inlet line with the at least one outlet opening is mechanically decoupled from the receptacle and the weighting device. This further reduces vibrations and/or movements of the receptacle and the weighting device significantly.

Preferably, the at least one outlet opening is configured for producing a liquid stream in a horizontal plane. With such a setup, the liquid stream when coming out of the opening has essentially no velocity component in vertical direction. This reduces measurement errors and weight fluctuations. Nevertheless, other configurations might be suitable as well.

In particular, that the inlet line comprises a multiplicity of outlet openings, whereby, preferably, the multiplicity of outlet openings is arranged in a common horizontal plane. With such a configuration, the liquid stream of test liquid can be distributed more uniformly in the receptacle which further reduces measurement errors and weight fluctuations.

Thus, according to a preferred embodiment, the multiplicity of outlet openings is configured for producing liquid streams in different horizontal directions, whereby, preferably, the different horizontal directions are equally spaced from each other.

For example, the multiplicity of outlet openings is arranged on a ring-shaped line, especially on the outer circumference of the ring-shaped line, whereby, preferably, the ring-shaped line is arranged in a horizontal plane in the receptacle. Thereby, preferably, the ring-shaped line communicates with a vertical line, whereby, the vertical line preferably is located along a central rotational axis of the ring-shaped line. Especially, the ring-shaped line is connected to the vertical line via at least one horizontal distribution line.

However, in another preferred embodiment, the multiplicity of outlet openings is for example arranged on a single linear line (l-shaped line), on a T-shaped line, on a triangular-shaped line, on a rectangular shaped line, on an H-shaped line, each of the lines preferably being arranged in a horizontal plane in the receptacle. Thereby, preferably, these lines communicate with a vertical line. A connection between the vertical line and the other lines preferably is realized by at least one horizontal distribution line.

Highly preferred, one or more of the following conditions are met:
- a ratio of (i) a volume of the material of the inlet line with the at least one outlet opening protruding into the receptacle, to (ii) the volume of the cavity of the receptacle for receiving liquid, is lower than 1:1 '000, especially lower than 1:5'000, in particular lower than 1:10'000;
- a ratio of (i) a cross-section of the solid material of the inlet line in a plane perpendicular to a longitudinal direction of the inlet line, at least in a part protruding into the receptacle and upstream the at least one outlet opening, to (ii) a surface area of a bottom of the receptacle for receiving liquid, is lower than 1:1'000, especially lower than 1:5'000, in particular lower than 1:10'000.

With these ratios, variations of buoyancy of the inlet line upon filling the receptacle with test liquid can be minimized. Overall, this helps to reduce undesired influences on the weight measurement.

Especially, a density of the material of the inlet line with the at least one opening, at least for the part protruding into the receptacle, is chosen as similar as possible to the density of the test fluid. This will further minimize undesired influences on the weight measurement.

For example, the density of the material of the inlet line with the at least one opening, at least for the part protruding into the receptacle is from 0.5 - 1.5 g/cm³, especially 0.8 - 1.2 g/cm³, in particular 0.9 - 1.1 g/cm³. This is in particular beneficial if the test liquid has a density in these ranges, such as e.g. water. However, for other test liquids, the density preferably is chosen in other ranges.

In particular, the receptacle comprises a fill level sensor capable of measuring the fill level of test liquid in the receptacle. In particular the weight of the receptacle can be used as an approximating fill level sensor to measure the fill level of test liquid in the receptacles. This allows for preventing overflow of the receptacle and/or determining an actual fill level of test liquid, e.g. for determining the volume of the test liquid in the receptacle. Inter alia, the fill level can be used for compensation buoyancy forces. Especially, the test stand comprises a control unit which is configured for communicating with the measuring device and/or the flow meter to be tested, especially for receiving data from these devices. In particular, the control unit is configured for obtaining the true flow rate of the flow meter to be tested by taking into account the data provided by the measuring device.

Preferably, the control unit is configured for receiving data from the measuring unit and/or for determining the mass and/or the volume of test liquid flowing through the flow meter to be tested per unit of time. In particular, the control unit is configured for determining the mass of the liquid in the receptacle as a function of time and, preferably, for extracting a slope of this function.

Especially, the control unit furthermore is configured for smoothing received data, e.g. with a software filter.

Furthermore, the control unit preferably is configured for comparing the true flow rate with the indicated flow rate provided by the flow meter to be tested. Thereby, preferably a correction factor and/or a deviation is calculated.

Especially, the control units is configured such that buoyancy forces effecting the weight measurement of the test liquid in the receptacle are compensated computationally by considering (i) the density of the material of the inlet line with the at least one opening, at least for the part protruding into the receptacle, (ii) the density of the test fluid and (iii) the fill level of the test fluid. This will further minimize undesired influences on the weight measurement. A further aspect of the second solution is a method for calibrating and/or testing a flow meter for a liquid, especially with a test stand according to the second solution, comprising the steps of:
(i) installing a flow meter to be tested in a test line of a test stand, whereby the test line comprises a supply line for supplying a liquid to the flow meter to be tested and a discharge line for discharging the liquid after exiting the flow meter to be tested;
(ii) delivering a test liquid by a liquid supply device to the supply line of the test line, so that the test liquid flows though the flow meter to be tested into the discharge line;
(iii) determining a mass of liquid per unit of time flowing through the flow meter to be tested with a measuring device; whereby the measuring device comprises a receptacle for receiving the test liquid to be quantified and an inlet line with at least one outlet opening for introducing the test liquid to be quantified into the receptacle and a weighting device for determining a mass of the receptacle and/or the test liquid;
   whereby
(iv) when determining the mass of test liquid per unit of time exiting the flow meter to be tested, the at least one outlet opening is constantly located below the liquid surface.

Advantages described above in connection with the inventive test stand and its specific embodiments are likewise given with regard to this inventive method. Especially locating the at least one outlet opening below the liquid surface ensures a gentler flow of the test liquid so that the introduction of the test liquid will be even gentler.

Preferably, the method is implemented with a test stand having one or more of the features according to the specific embodiments described above. Also this method can be combined with the method of the first solution, if desired.

According to a preferred embodiment, before step (iii), the receptacle is pre-filled with the test liquid such that the at least one outlet opening of the inlet line is located below a liquid surface in the receptacle. This ensures more constant conditions during the whole measurement. Nevertheless, the method works as well without pre-filling the receptacle.

Preferably, a material of the inlet line with the at least one outlet opening, at least for the part protruding into the receptacle, is chosen such that it has a density of 0.90 - 1.10, especially 0.95 - 1.05, preferably 0.98 - 1.02, times the density of the test liquid, in particular the material has the same density as the test liquid. This will minimize undesired influences on the weight measurement as explained above in more detail.

In particular, the test liquid is discharged out of the at least one opening as a liquid stream in horizontal direction. Most preferably, the test liquid is discharged through a multiplicity of outlet openings each producing a horizontal stream.

Thereby, preferably, the test liquid is discharged as liquid streams in a different horizontal directions, whereby, preferably, the different horizontal directions are equally spaced from each other.

In particular, the test liquid is provided by the liquid supply device with a constant flow rate. This helps to determine the mass of liquid flowing through the flow meter to be tested per unit of time in an efficient and precise manner. However, for special calibrations and/or tests, the flow rate can be varied throughout the procedure.

In particular, for determining the mass of liquid flowing through the flow meter to be tested per unit of time, the mass of the liquid in the receptacle is measured as a function of time and, preferably, the slope of this function is extracted in order to obtain the true flow rate.

Preferably, the true flow rate is compared with the indicated flow rate provided by the flow meter under test in order to obtain a correction factor and/or a deviation.

As mentioned above, the first and the second solutions of the present invention can be implemented in a combined solution. Thus in this case, a test stand for calibrating and/or testing a flow meter for a liquid, comprises:
a) a test line for installation of a flow meter to be tested, whereby the test line comprises a supply line for supplying a test liquid to the flow meter to be tested and an a discharge line for discharging the test liquid after exiting the flow meter to be tested;
b) a liquid supply device for delivering the test liquid to the supply line;
c) a measuring device for determining a mass of test liquid flowing through the flow meter to be tested per unit of time; whereby the measuring device comprises a receptacle for receiving the test liquid to be quantified and an inlet line with at least one outlet opening for introducing the test liquid to be quantified into the receptacle and a weighting device for determining a mass of the liquid in the receptacle;
   whereby
d) the test stand comprises a heating device for increasing the temperature of the test liquid before entering the flow meter to be tested, and a cooling device for reducing the temperature of the test liquid after exiting the flow meter to be tested; and
e) with regard to a vertical height of the receptacle, the at least one outlet opening of the inlet line is located in a lower half, especially in a lowest quarter, of the receptacle.

Advantages described above in connection with the test stands according to the two individual solutions and their specific embodiments are likewise given with regard to the combined solution.

Especially, such a test stand is highly beneficial since it allows to calibrate flow meters for liquids at different temperatures, in particular with a test liquid above its standard boiling point, e.g. > 100°C for water, with minimal measurement errors. Thus, there is a synergistic cooperation between the solutions.

Preferably, in the combined solution, features of specific embodiments described above for one of the individual solutions are likewise implemented.

For the combined solution, a method for calibrating and/or testing a flow meter for a liquid, especially with the test stand of the combined solution, comprises the steps of:
(i) installing a flow meter to be tested in a test line of a test bench, whereby the test line comprises a supply line for supplying a liquid to the flow meter to be tested and a discharge line for discharging the liquid after exiting the flow meter to be tested;
(ii) delivering a test liquid by a liquid supply device to the supply line of the test line, so that the test liquid flows though the flow meter to be tested into the discharge line;
(iii) determining a mass of the test liquid per unit of time exiting the flow meter to be tested with a measuring device; whereby the measuring device comprises a receptacle for receiving the test liquid to be quantified and an inlet line with at least one opening for introducing the test liquid to be quantified into the receptacle and a weighting device for determining a mass of the receptacle and/or the test liquid;
   whereby
(iv) when determining the mass of test liquid per unit of time exiting the flow meter to be tested, the at least one outlet opening is constantly located below the liquid surface; and
(v) the initial temperature of the test liquid delivered by the liquid supply device is increased to a test temperature with a heating device before the liquid enters the flow meter to be tested, and the temperature of the liquid after having passed the flow meter to be tested is reduced to a final temperature with a cooling device.

Furthermore, the test stand of the combined solution as described above can be used for calibrating and/or testing a flow meter for a liquid with a test liquid having a temperature above ambient temperature, especially above the standard boiling point of the liquid.

Advantages described above in connection with the methods and the use according to the two individual solutions and their specific embodiments are likewise given with regard to the combined solution.

Preferably, in the combined solution, features of specific implementations of the methods described above for one of the individual solutions are likewise implemented.

Further advantageous configurations of the invention are evident from the exemplary embodiments.

### Brief description of drawings

The drawings used to explain the embodiments show:
- Fig. 1: a test stand with a heating device for increasing the temperature of the test liquid before entering the flow meter to be tested, and a cooling device for reducing the temperature of the liquid after exiting the flow meter to be tested;
- Fig. 2: a cross-section of the measuring device for determining a mass of liquid flowing through the flow meter to be tested per unit of time whereby with regard to a vertical height of the receptacle, and at least one outlet opening of the inlet line is located in the lowest quarter of the receptacle;
- Fig. 3: a top view of the measuring device of Fig. 2;
- Fig. 4: an inlet line for a measuring device having a square-shaped line with 4 outlet openings;
- Fig. 5: an inlet line for a measuring device having a H-shaped line with a total of 12 outlet openings;
- Fig. 6: an inlet line for a measuring device having an I-shaped line with 6 outlet openings;
- Fig. 7: a graph representing a measurement of the mass (m) of a test liquid in the receptacle of the measuring device versus time (t);
- Fig. 8: an alternative setup of the central part of the test stand 100 shown in Fig. 1 with a heating device comprising a supply side heat exchanger and a supplemental supply side heat exchanger as after-heater, and the cooling device comprising a discharge side heat exchanger and a supplemental discharge side heat exchanger as after-cooler.

In the figures, the same components are given the same reference symbols.

### Exemplary embodiments

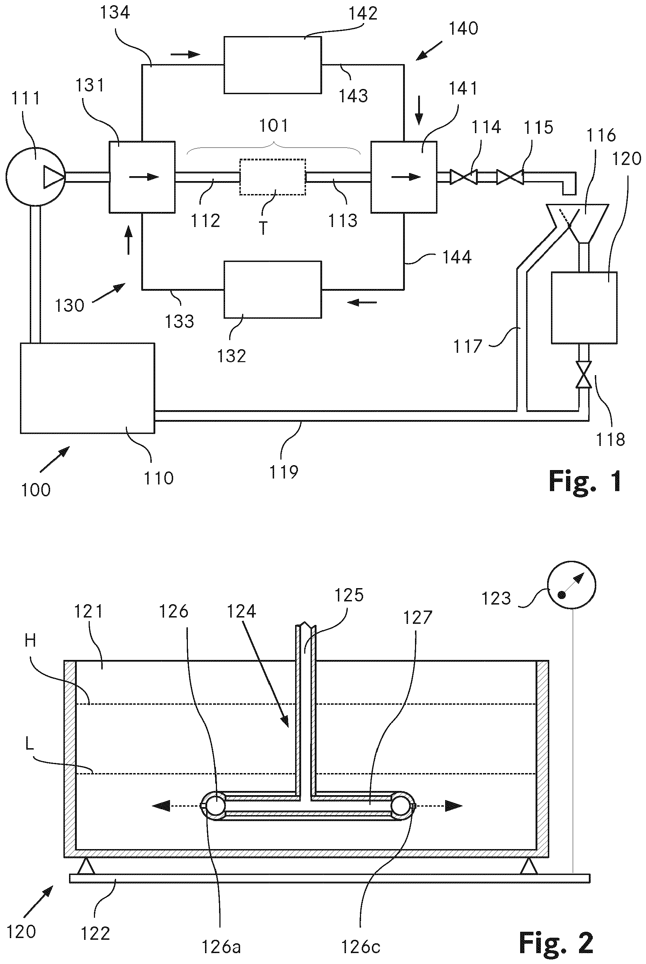

Fig. 1 shows a test stand 100 comprising a reservoir 110 for a test liquid (not shown) with a pump 111 for supplying the test liquid. For example, the test liquid is water. The test stand 100 furthermore comprises a test line 101 consisting of a supply line 112 and a discharge line 113. In between the supply line 112 and the discharge line 113, a flow meter to be tested T can be connected in series.

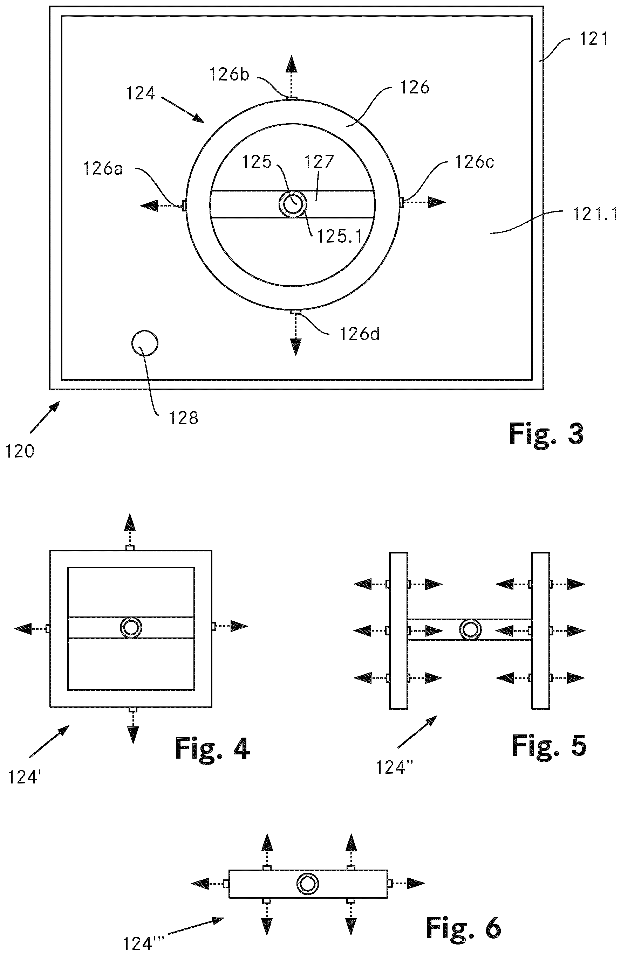

Downstream the discharge line 113, a pressure relief valve 114 and flow control valve 115 are arranged in the fluid line. The flow control valve 115 leads into a diverter 116, which allows for either directing the test fluid trough a bypass line 117 and a return line 119 back into the reservoir 110 or, into a measuring device 120. With the measuring device, the mass of the test liquid can be determined as a function of time (for details see Fig. 2 and 3). Test liquid can be returned to the reservoir 110 if the outlet valve 118 at the bottom of the measuring device is opened.

Furthermore, the test stand 100 comprises a heating device 130 downstream the pump 111 and upstream the supply line 112 for increasing the temperature of the test liquid before entering the flow meter to be tested T. Also a cooling device 140 is arranged downstream the discharge line 113 and upstream the pressure relief valve 114 device for reducing the temperature of the liquid after exiting the flow meter to be tested T.

The heating device 130 and the cooling device 140 both comprise recuperative and indirect contact heat exchangers 131, 141 with a first flow path for the test liquid and a separate second flow path for a heat transfer medium. Thus, there is no direct physical contact between the test liquid and the heat transfer medium in the heat exchangers 131, 141.

The supply side heat exchanger 130 furthermore is connected with a heating unit 132, which is designed for heating a heat transfer medium and providing it via a fluid line 133 to the second flow path of the supply side heat exchanger 131. Likewise the discharge side heat exchanger 140 is connected with a cooling unit 142, which is designed for cooling a heat transfer medium and providing it via a fluid line 143 to the second flow path of the discharge side heat exchanger 141.

The second flow path of the supply side heat exchanger 131 is connected to the cooling unit 142 of the discharge side heat exchanger 141 via fluid line 134 and the second flow path of the discharge side heat exchanger 141 is connected to the heating unit 132 of the supply side heat exchanger 131, such that in operation the heat transfer medium circulates between the supply side heat exchanger 131 and discharge side heat exchanger 141, whereby in between it can be heated by the heating unit 132 and cooled by the cooling unit 142.

In operation, a flow meter to be tested T is installed in the test line 101 in series with the supply line 112 and the discharge line 113. Then the pump 111 supplies test liquid from the tank 110 with a constant flow rate through the heat exchanger 131, the supply line 112, the flow meter to be tested T, the discharge line 113 and the heat exchanger 141. Upstream the heat exchanger 131, the test liquid is for example at room temperature. The flow rate can be controlled with the flow control valve 115 and/or the pump 111.

In the heat exchanger 131, the test liquid is heated up to a temperature of for example 1 10°C. Thus, in the test line 101, the test liquid remains at this temperature until it is cooled down in the heat exchanger 141 to room temperature. Thereby, the pressure in the test line 101 is kept for example around 3 bars if the test liquid is water in order to avoid boiling of the test liquid. The pressure can be generated with pump 111 and controlled with the pressure relief valve 114.

In operation, the heat transfer medium continuously circulates between the heat exchangers 131, 141 and the heating and cooling units 132, 142.

In order to achieve stable conditions, the test liquid may be directed by the diverter 116 through the bypass 117 into the return line 119 and back into the tank 110. Once the conditions are sufficiently stable, the diverter 116 can be switched in order to direct the test liquid into the measuring device 120 for determining the quantity of test liquid arriving at the measuring unit 120 or flowing through the flow meter to be tested T, respectively, per unit of time.

If desired, before taking any data with the measuring device 120, the outlet valve 118 of the measuring device may be kept in open position for a certain time. This allows the test liquid to flow through the measuring device 120 what in turn helps to stabilize the measuring device 120.

The measuring device 120 is shown in more detail in Fig. 2 in a cross section and in Fig. 3 in a top view. The device 120 comprises a cuboid receptacle 121 with a rectangular bottom surface 121.1 in which an outlet 128 is located (see Fig. 3). The outlet can be opened and closed with the outlet valve 118 (see Fig. 1). Furthermore, the measuring device 120 comprises an inlet line 124 consisting of a vertical line 125 protruding into the receptacle 121, and a horizontally arranged ring-shaped line 126. The latter is located at the lower end of the vertical line 125 and is in fluid communication with the vertical line 125 via a horizontal distribution line 127. Furthermore, the ring-shaped line 126 comprises four openings 126a, 126b, 126c, 126d in a common horizontal plane and equally spaced around the vertical line 125. The openings 126a, 126b, 126c, 126d are configured to produce liquid streams in four different horizontal directions.

With regard to a vertical height of the receptacle 212, the outlet openings 126a, 126b, 126c, 126d are located in the lowest quarter of the receptacle 212.

Furthermore, the measuring device is configured as follows:
- Also, the ratio of (i) a volume of the material of the inlet line 124 with the outlet openings 126a, 126b, 126c, 126d protruding into the receptacle, to (ii) the volume of the cavity of the receptacle 121 for receiving the test liquid, is lower than 1:10'000.
- The ratio of (i) a cross-section 125.1 of the solid material of the vertical line 125 in a plane perpendicular to the longitudinal direction of the vertical line 125 in the part protruding into the receptacle and upstream the outlet openings 126a, 126b, 126c, 126d, to (ii) the surface area of a bottom 121.1 of the receptacle 121 for receiving liquid, is lower than 1:10'000.

Additionally, the measuring device 120 comprises a balance 122 with a control unit 123, which allows for determining the mass of the receptacle 121 and any test liquid comprised therein.

In operation, the test fluid is directed by the diverter 116 (see Fig. 1) into the vertical line 125, which transmits the test fluid via the horizontal distribution line 127 into the ring-shaped line 126. From the ring-shaped line 126 the test fluid is discharged through the openings 126a, 126b, 126c, 126d in horizontal directions into the receptacle 121.

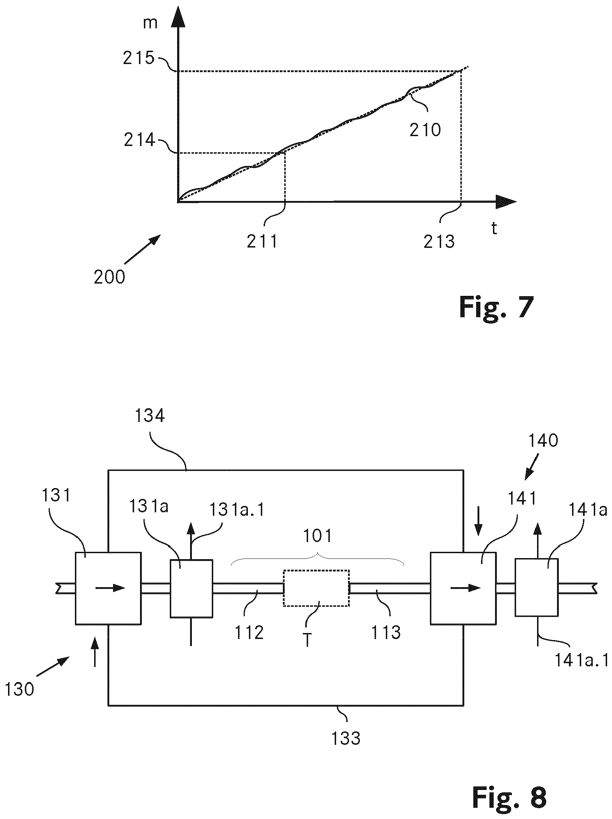

For calibration and/or testing the flow meter to be tested T, the mass of the liquid in the receptacle 121 is measured as a function of time in a flying start and stop method and recorded with a control unit (not shown). A graph 200 representing such a measurement is shown in Fig. 7, which shows the mass (m) on the ordinate and the time (t) on the abscissa.

For determining the true flow rate of the flow meter to be tested T, the slope 210 of the recorded data (solid curve) between a start time 211/start mass 214 and stop time 213/stop mass 215 is extracted with the control unit. Thereby, the recorded data can be smoothed with a software filter, if desired.

In particular, the start time 211 is chosen such that enough test liquid is in the receptacle 121 to cover the openings 126a, 126b, 126c, 126d. This is indicated by the lower fill level L in Fig. 2. The stop time 213 can in principle be any time after, provided that there is no overflow in the receptacle 121. Then a higher fill level H (see Fig. 2) is reached.

With the control unit, the true flow rate can be compared to the indicated flow rate provided by the flow meter to be tested T. Thereby, a correction factor and deviation can be calculated.

Fig. 4, 5 and 6 show alternative inlet lines 124', 124", 124", which can be used in addition or alternatively to the inlet line 124 shown in Fig. 2 and 3.

Specifically, the inlet line of Fig. 4 comprises a square-shaped line instead of the ring-shaped line 125 shown in Fig. 2 and 3. In Fig. 5, the inlet line comprises an H-shaped line with a total of 12 openings whereas in Fig. 6, the inlet line comprises an I-shaped line with 6 openings.

Fig. 8 shows an alternative setup of the central part of the test stand 100 shown in Fig. 1. Thereby, the heating device 130 comprises a supply side heat exchanger 131 and a supplemental supply side heat exchanger 131a downstream the heat exchanger 131. Likewise the cooling device comprises a discharge side heat exchanger 141 and a supplemental discharge side heat exchanger 141a. Each of the four heat exchangers 131, 131a, 141, 141a, comprise a first flow path for the test liquid and a separate second flow path for a heat transfer medium.

The second flow path of the supply side heat exchanger 131 is directly connected with the second flow path of the discharge side heat exchanger 141 via a fluid line 134 and the second flow path of the discharge side heat exchanger 141 is directly connected with the second flow path of the supply side heat exchanger 131 via a fluid line 133, such that in operation, the heat transfer medium circulates between the supply side heat exchanger 131 and discharge side heat exchanger 141 (transfer pump not shown).

On the supply side, the supplemental supply side heat exchanger 131a is used as an after-heater, which is operated with a second and hot heat transfer medium 131a.1, for further increasing the temperature of the test fluid to the test temperature. On the discharge side, the supplemental discharge side heat exchanger 141a is used as an after-cooler, which is operated with a third and cool heat transfer medium 141a.1, for further decreasing the temperature of the test fluid to the desired final temperature.

In this setup, there is no need for heating unit 132 and cooling unit 142 in the fluid lines 133, 134. However, a heating unit and cooling unit may be provided in order to heat and cool the second and the third heat transfer media 131a.1 and 141a.1.

Thus, it will be appreciated by those skilled in the art that the present invention can be embodied in other specific forms without departing from the spirit or essential characteristics thereof. The presently disclosed embodiments are therefore considered in all respects to be illustrative and not restricted.

For example, the heating device 130 and cooling device 140 can be omitted, e.g. if solely the second solution of the invention is to be realized.

Instead of heat exchangers 131, 141, other heating and cooling units can be installed.

Also it is possible to use other measuring device 120, e.g. for measuring the volume of the test liquid as a function of time and/or a measuring device with a different inlet system 124 not having an outlet opening of the inlet line located in a lower quarter or lower half of the receptacle 121. This, if only the first solution of the invention is to be realized.

For example the receptacle 121 can have a different form and the diverter 116 and the bypass 117 can be omitted, if desired. Likewise, the pressure relief valve 114 and/or the flow control valve 115 can be omitted.

Instead of a pump 111, another liquid supply means can be used and the return line 119 can for example be replaced by a waste liquid tank or a drain.

In summary, it is to be noted that the invention allows for a precise calibration and testing of flow meters at increased temperatures in a rather short time while still achieving a high precision.

## Claims

1. Test stand (100) for calibrating and/or testing a flow meter for a liquid (T), comprising:
a) a test line (101) for installation of a flow meter to be tested (T), whereby the test line (101) comprises a supply line (112) for supplying a test liquid to the flow meter to be tested (T) and a discharge line (113) for discharging the test liquid after exiting the flow meter to be tested (T);
b) a liquid supply device (111) for delivering the test liquid through the supply line (112);
c) a measuring device (120) for determining a quantity, especially a mass and/or a volume, of test liquid flowing through the flow meter to be tested (T);
**characterized in that**
d) the test stand comprises a heating device (130) for increasing the temperature of the test liquid before entering the flow meter to be tested (T), and a cooling device (140) for reducing the temperature of the liquid after exiting the flow meter to be tested (T).

2. Test stand according to claim 1, **characterized in that**
- the heating device (130) comprises a supply side heat exchanger (131) with at least two separate flow paths, whereby the supply side heat exchanger (131) is arranged in the supply line (112) such that in operation the liquid to be delivered to the flow meter (T) passes a first flow path of the supply side heat exchanger (131); and whereby the heating device (130) further comprises a heating unit (132), which is designed for heating a heat transfer medium and providing it to the second flow path of the supply side heat exchanger (131); and
- **in that** the cooling device (140) comprises a discharge side heat exchanger (141) with at least two separate flow paths, whereby the discharge side heat exchanger (141) is arranged in the discharge line (113) such that in operation, the liquid exiting the flow meter to be tested (T) passes a first flow path of the discharge side heat exchanger (141); and whereby the cooling device (140) further comprises a cooling unit (142), which is designed for cooling a heat transfer medium and providing it to the second flow path of the discharge side heat exchanger (141).

3. Test stand according to claim 2, **characterized in that** the second flow path of the supply side heat exchanger (131) is connected to the cooling unit (142) of the discharge side heat exchanger (141) and the second flow path of the discharge side heat exchanger (141) is connected to the heating unit (132) of the supply side heat exchanger (131), such that in operation the heat transfer medium circulates between the supply side heat exchanger (131) and discharge side heat exchanger (141), whereby in between it can be heated by the heating unit (131) and cooled by the cooling unit (142).

4. Test stand according to any of preceding claims, **characterized in that** the liquid supply (111) device for delivering the liquid to the supply line is a pump, whereby, preferably, the liquid supply device on an input side is in fluid communication with a liquid reservoir (110).

5. Test stand according to any of preceding claims, **characterized in that** at least one valve, especially a pressure relief valve (114) and/or a flow control valve (115), is included in the discharge line (113) and/or downstream the discharge line (113) and upstream the measuring device (120).

6. Test stand according to any of preceding claims, **characterized in that** there is a bypass line (117) for bypassing the measuring device (120), whereby a diverter valve (116) is arranged such that the liquid exiting the flow meter to be tested (T) can either be directed into the bypass line (117) or into the measuring device (120).

7. Test stand according to any of preceding claims, **characterized in that** the measuring device (120) comprises a receptacle (121) for collecting the test liquid exiting the flow meter to be tested (T) and a device (122) for determining the mass and/or the volume of the test liquid in the receptacle (121).

8. Test stand according to claim 7, **characterized in that** the measuring device (120) is a measuring device for determining a mass of the test liquid flowing through the flow meter to be tested per unit of time; whereby the measuring device (120) comprises a receptacle (121) for receiving the test liquid to be quantified and an inlet line (124) with at least one outlet opening (126a-d) for introducing the test liquid to be quantified into the receptacle (121) and a weighting device (122) for determining a mass of the test liquid in the receptacle (121), and whereby, with regard to a vertical height of the receptacle (121), the at least one outlet opening (126a-d) of the inlet line (124) is located in a lower half, especially in a lowest quarter, of the receptacle (121).

9. Method for calibrating and/or testing a flow meter for a liquid, especially with a test stand according to any of preceding claims, comprising the steps of:
(i) installing a flow meter to be tested (T) in a test line (101) of a test stand (100), whereby the test line (101) comprises a supply line (112) for supplying a liquid to the flow meter to be tested (T) and a discharge line (113) for discharging the liquid after exiting the flow meter to be tested (T);
(ii) delivering a test liquid by a liquid supply device (111) to the supply line (112) of the test line (101), so that the test liquid flows through the flow meter to be tested (T) into the discharge line (113);
(iii) determining a quantity, especially the mass and/or the volume, of test liquid per unit of time flowing through the flow meter to be tested (T) with a measuring device (120);
**characterized in that**
(iv) an initial temperature of the test liquid delivered by the liquid supply device (110) is increased to a test temperature with a heating device before (130) the liquid enters the flow meter to be tested (T), and the temperature of the liquid after having passed the flow meter to be tested (T) is reduced to a final temperature with a cooling device (140).

10. Method according to claim 9, **characterized in that** the initial temperature is room temperature or a temperature of 0 - 50°C, especially 10 - 30°C, in particular 15 - 27°C and **in that** the test temperature is a temperature above the standard boiling point of the liquid, especially at least 5°C, in particular at least 10°C, for example 10 - 30°C, above the standard boiling point.

11. Method according to any of claims 9 - 10, **characterized in that** a difference between the initial temperature and the final temperature is 0-5°C, especially 0-2°C, in particular 0 - 1°C, most preferably 0°C.

12. Method according to any of claims 9 - 11, **characterized in that** in the test line (101), a pressure of the liquid is increased from an initial pressure to a test pressure, especially with the liquid supply device (110), and subsequently released to a final pressure, especially with a pressure relief valve (114), before the quantity of the liquid exiting the flow meter to be tested (T) is determined with the measuring device (120), whereby, preferably, the pressure in the test line (101) is increased such that at the test temperature, boiling of the liquid passing the flow meter to be tested is prevented.

13. Method according to any of claims 9 - 12, **characterized in that** determination of the quantity of the liquid exiting the flow meter to be tested (T) with the measuring device (120) takes place under ambient pressure and/or ambient temperature.

14. Method according to any of claims 9 - 13, **characterized in that** it comprises a step of determining a mass of liquid per unit of time exiting the flow meter to be tested (T) with the measuring device (120); whereby the measuring device (120) comprises a receptacle (121) for receiving the liquid to be quantified and an inlet line (124) with at least one outlet opening (126a-d) for introducing the liquid to be quantified into the receptacle (121) and a weighting device (122) for determining a mass of the receptacle (121) and/or the test liquid; and whereby when determining the mass of test liquid per unit of time exiting the flow meter to be tested (T), the at least one outlet opening (126a-d) is constantly located below the liquid surface.

15. Use of a test stand according to any of claims 1 - 8 for calibrating and/or testing a flow meter for a liquid (T) with a liquid having a temperature above ambient temperature, especially above the standard boiling point of the liquid.
